# EUROPÄISCHE PATENTSCHRIFT

(11) **EP 0 663 684 B1**
(45) Veröffentlichungstag und Bekanntmachung des Hinweises auf die Patenterteilung: **29.10.1997**
(21) Anmeldenummer: 95100088.4
(22) Anmeldetag: 03.01.1995
(51) Int. Cl.: H01K 1/32

(54) **Reflektorlampe**
Reflector lamp
Lampe à réflecteur

(30) Priorität: 18.01.1994 DE 4401270
(43) Veröffentlichungstag der Anmeldung: 19.07.1995
(73) Patentinhaber: Patent-Treuhand-Gesellschaft für elektrische Glühlampen mbH, 81543 München (DE)
(72) Erfinder: Bunk, Axel, D-81379 München (DE); Klam, Dr. Rüdiger, D-85072 Eichstätt (DE); Ender, Elmar, D-86152 Augsburg (DE); Glöckler, Frank, D-85072 Eichstätt (DE)

(56) Entgegenhaltungen:
- EP-A- 0 361 674
- EP-A- 0 470 496
- EP-A- 0 590 602

## Beschreibung

Die Erfindung geht aus von einer Reflektorlampe gemäß dem Oberbegriff des Anspruchs 1.

Derartige Lampen sind beispielsweise aus der EP-A 470 496 und EP-A 460 913 bekannt. Die dort beschriebenen Halogenglühlampen sind mit einer Beschichtung versehen, die das sichtbare Licht transmittiert und die IR-Strahlung in das Lampeninnere reflektiert (Warmlichtspiegel). Die Lampe ist in einem Reflektor eingesetzt, dessen Glaskalotte innen mit einer Interferenzfilterbeschichtung versehen ist, die sichtbares Licht reflektiert und IR-Strahlung transmittiert (Kaltlichtspiegel). Derartige Lampen eignen sich für die Beleuchtung kühler Objekte. Allerdings ist die Wärmebelastung der die Lampe aufnehmenden Leuchte aufgrund des Kaltlichtspiegels sehr hoch.

Es ist Aufgabe der vorliegenden Erfindung eine Reflektorlampe bereitzustellen, die eine akzeptable Wärmebelastung in Ausstrahlungsrichtung aufweist, ohne dabei die Wärmebelastung der Leuchte hochzutreiben.
Diese Aufgabe wird durch die kennzeichnenden Merkmale des Anspruchs 1 gelöst. Besonders vorteilhafte Ausgestaltungen finden sich in den Unteransprüchen.

Die Erfindung verringert die bei Kaltlichtspiegeln massiv rückwärtig (zur Leuchte hin) emittierte IR-Strahlung, indem dieser Anteil zwar in Ausstrahlungsrichtung emittiert wird, jedoch vorher derart beeinflußt wird, daß er diffus abgestrahlt wird. Daher wird nur noch die sichtbare Strahlung gebündelt abgestrahlt, während die ungerichtete IR-Strahlung sich gleichmäßig verteilt. Der Leuchtkörper ist dabei in bezug auf den Reflektor vorteilhaft axial angeordnet um den Anteil der Direktstrahlung, die also die Reflektoreinheit ohne Umlenkung am Reflektor verläßt, zu minimieren. Zur weiteren Verbesserung kann auch noch eine Abschirmung am Kolbenende (z.B. eine Beschichtung aus einem Metalloxid, wie in der EP-A 460 913 beschrieben) angebracht sein. Es ist jedoch auch die Verwendung transversaler Wendeln möglich.
Die Verwendung eines Mittels, das bewirkt, daß die IR-Strahlung der Glühlampe diffus abgestrahlt wird, das aber die sichtbare Strahlung nicht modifiziert, schafft eine Konstellation, bei der der Leuchtkörper nach wie vor als Quelle der sichtbaren Strahlung wirkt. Die IR-Strahlungs-Quelle ist jedoch scheinbar der gesamte Kolben, auf dessen viel größere Dimensionierung im Vergleich zum Leuchtkörper der Reflektor nicht abgestimmt ist.
Als Mittel zur diffusen Abstrahlung der IR-Strahlung eignet sich insbesondere eine übliche renzfilterbeschichtung, die als Warmlichtspiegel wirkt. Die Kante zwischen dem Bereich hoher Transmission (sichtbares Licht mit einer Wellenlänge ca. 400-800 nm) und dem Bereich hoher Reflexion (IR-Strahlung mit einer Wellenlänge größer als ca. 800 nm) sollte dabei vorteilhaft bei ca. 700-900 nm liegen. Die hohe Reflektivität der Beschichtung führt dabei zu Vielfachreflexionen der IR-Strahlung im Kolben und erzeugt letztendlich den Eindruck, daß der gesamte Kolben die IR-Strahlungsquelle ist.

Die hierzu verwendeten Schichten (Stapel von abwechselnden Schichten mit hohem und niedrigem Brechungsindex, die z.B. aus TiO₂, Ta₂O₅ oder Nb₂O₅ bzw. SiO₂ oder MgF₂ bestehen) sind beispielsweise in der US-PS 5 179 468 oder US-PS 5 138 219 beschrieben. Je nach Dimensionierung der Schichtstapel eignen sich diese Schichten sowohl als Kaltlicht- als auch als Warmlichtspiegel sowie als Breitbandspiegel (vgl. US-PS 4 663 557).

Eine andere Alternative sind Beschichtungen auf Metallbasis (z.B. Silber), wie sie z.B. in der US-PS 4 249 101 beschrieben sind, die selektiv IR-reflektierend wirken.

Eine weitere Alternative sind Beschichtungen, die blasenbildende organometallische Verbindungen enthalten, die selektiv IR-streuend wirken (EP-A 176 345). Weiterhin können auch IR-absorbierende Schichten (z.B. eine dünne Goldschicht) Verwendung finden, die die absorbierte Wärme wieder abstrahlen. Entscheidend für die Erfindung ist lediglich die Eigenschaft, daß der Kolben mit einem Mittel, beispielsweise den hier angeführten Beschichtungen, versehen ist, dessen Wirkung eine diffuse Abstrahlung der IR-Strahlung von der Kolbenoberfläche ist.

Diese diffus vom Kolben emittierte IR-Strahlung ermöglich die Verwendung eines Reflektors, der als Breitband-Spiegel sowohl sichtbares Licht als auch einen erheblichen Teil der IR-Strahlung reflektiert. Damit ist gemeint, daß er zumindest den an das sichtbare Licht angrenzenden Wellenlängenbereich zwischen 800 und 1200 nm reflektiert, da hier ein Schwerpunkt der Glühlampenemission liegt. Die Wahl der Kante ermöglicht eine optimale Balance zwischen der Wärmebelastung in Abstrahlungsrichtung (zur Reflektoröffnung hin) und in rückwärtiger Richtung (zum Sockel bzw. zur Leuchte hin). Ein Material, das die grundlegenden Anforderungen erfüllt, ist beispielsweise ein Aluminiumreflektor, der breitbandig zwischen 300 und mehr als 3000 nm reflektiert. Besonders gut eignet sich ein Substrat, insbesondere eine Glas- oder Kunststoffkalotte, das mit einer breitbandigen Interferenzfilter-Beschichtung versehen ist. Die kurzwellige Kante liegt vorteilhaft im Bereich um ca. 400 450 nm, die langwellige Kante vorteilhaft bei 1200 - 2000 nm, insbesondere um 1500 nm. Diese Anordnung kann leichter auf das gewünschte Ergebnis (möglichst geringe thermische Belastung in Vorwärtsrichtung) hin optimiert werden als ein umreflektor, bei dem Transmissions- und Reflexionsverhalten mehr oder weniger festgelegt sind. Der Vorteil des massiven Aluminiumreflektors ist demgegenüber seine Unempfindlichkeit (insbes. gegen Wärme). Prinzipiell geeignet ist auch ein mit Metall (insbes. Aluminium) beschichtetes Substrat.

Die bevorzugte Transmission des Kolbens im Sichtbaren liegt bei besser als 90 %. Die bevorzugte Reflexion des Reflektors im Bereich des Breitbandspiegels ist besser als 0,9 (90 %). Ein gewisser Anteil der Resttransmission durch den Reflektor zur Leuchte hin kann durchaus in Kauf genommen werden (Größenordnung 0,5-2 % des Gesamtlichtstroms). Im sichtbaren Strahlungsbereich dient er dazu, einen ästhetischen Eindruck der Reflektoreinheit zu schaffen.

Die Reflektorlampe, die insbesondere in der Allgemeinbeleuchtung eingesetzt wird und typisch für Wattstufen von 20 W bis mehr als 100 Watt eingesetzt werden kann, eignet sich insbesondere gut für die Verwendung von energiesparenden Lampen, bei denen der Kolben so geformt ist, daß die Lichtausbeute erhöht ist, weil die IR-Strahlung besonders effektiv auf den Leuchtkörper zurückgeworfen wird und dessen Temperatur erhöht. Hierfür eignen sich insbesondere sphärische (kugelige) oder ellipsoidale (sphäroidale) oder ähnliche Kolbenformen.

Die Erfindung wird anhand mehrerer Ausführungsbeispiele näher erläutert. Es zeigt
- Fig. 1: eine Reflektorlampe gemäß der Erfindung
- Fig. 2: ein weiteres Ausführungsbeispiel einer erfindungsgemäßen Lampe
- Fig. 3: eine Zusammenschau der Strahlungsanteile einer Halogenglühlampe und der spektralen Reflexion verschiedener Reflektoren
- Fig. 4: die räumliche Verteilung der Strahlung bei verschiedenen Reflektoreinheiten

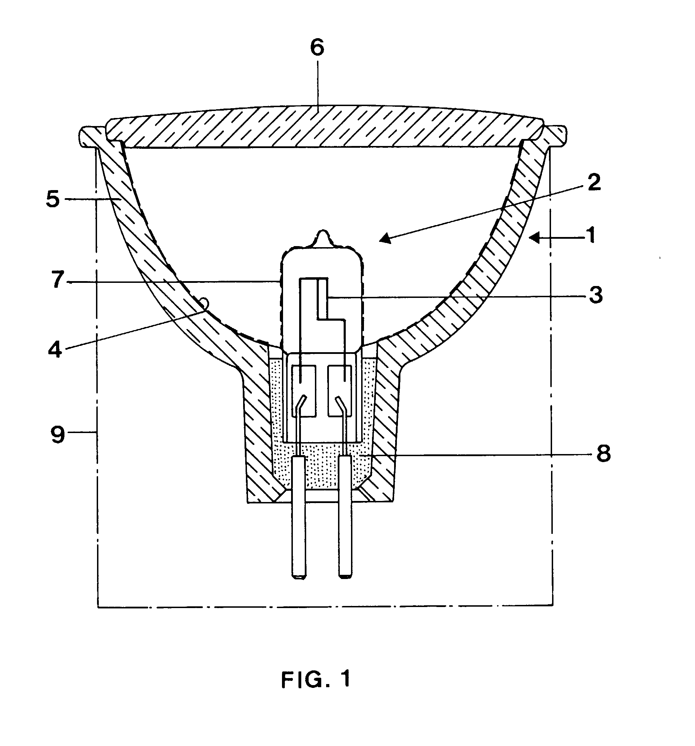

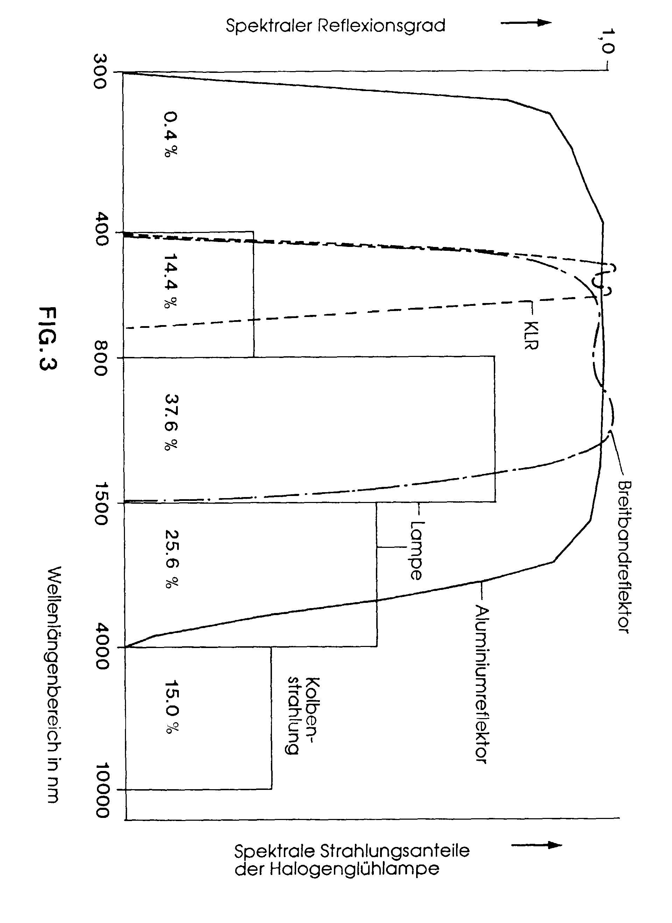

Die in Fig. 1 dargestellte Reflektoreinheit 1 besteht aus einer 12 V-Niederspannungsglühlampe 2 mit einer Leistungsaufnahme von 50 W, die auf der Symmetrieachse eines rotationssymmetrischen Aluminiumreflektors 5 (der entweder aus Reinstaluminium gefertigt ist oder aus einem Glassubstrat, das mit einer Aluminiumbeschichtung 4 versehen ist) fest eingekittet (8) ist, so daß die Längsachse der Halogenglühlampe 2 und die Symmetrieachse des Reflektors 5 zusammenfallen und die axial angeordnete Wendel 3 der Halogenglühlampe in der Nähe der "Brennfläche" des Reflektors liegt. Der Reflektor ist mit einer Abdeckscheibe 6 verschlossen. Der Kolben ist ein Zylinder aus Quarzglas oder Hartglas, der außen (oder auch innen) mit einer IR-reflektierenden, -streuenden oder -absorbierenden Beschichtung 7 gemäß der Beschreibung auf Seite 3 versehen ist. Schematisiert ist die die Lampe umfassende Leuchte 9 dargestellt. Die spektrale Reflexion des Aluminiumreflektors ist in Fig. 3 gezeigt. Sie erstreckt sich bis nahe 4000 nm und reflektiert daher den wesentlichen Teil der Lampenstrahlung, die ebenfalls mit eingezeichnet ist.

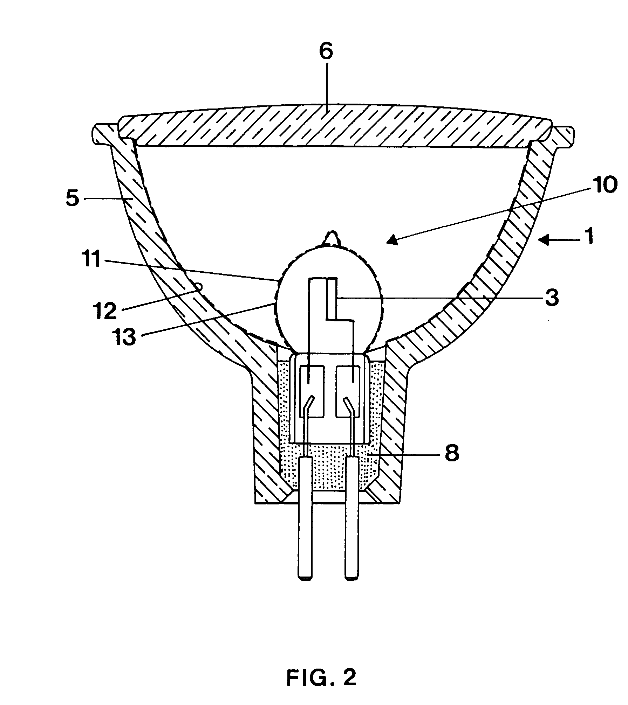

In Fig. 2 entsprechen gleiche Bezugsziffern gleichen Bauteilen. Es wird jedoch eine Glühlampe 10 mit Ellipsoid- (oder Kugel-)Kolben 13 verwendet, der mit einem Interferenzfilter 11 aus mehr als 20 Schichten (Ta₂O₅/SiO₂) beschichtet ist. Es handelt sich um ein an sich bekanntes Warmlichtfilter, das zwischen 400 und 800 nm transmittiert und oberhalb 800 nm reflektiert. Die Transmission im Sichtbaren liegt bei 90 %, die Reflexion im IR bei etwa 65 %. Die einzelnen Schichtdicken auf dem Kolben sind näherungsweise konstant.

Der Reflektor 5 ist ein Glassubstrat, dessen innere Kontur mit einer Interferenzfilterbeschichtung 12 aus TiO₂/SiO₂ mit mehr als 20 Schichten versehen ist, die als Breitband-Spiegel wirkt, dessen Reflexion in einem Wellenlängenbereich zwischen ca. 400 und 1500 nm in der Größenordnung von mehr als 90 % ist. Die Dicke der einzelnen Schichten variiert dabei über die Reflektorfläche. Die spektrale Reflexion ist in Fig. 3 gezeigt. Oberhalb der Kante von 1500 nm ist der Strahlungsbeitrag des Leuchtkörpers im Wellenlängenbereich zwischen 1500 und 4000 nm in einer tolerierbaren Größenordnung, so daß er teilweise oder auch vollständig rückwärtig emittiert wird. Hierfür kann, falls gewünscht, das Schichtendesign so abgestimmt sein, daß es im langwelligen IR teiltransmittierend (ca. 70 %) wirkt.

Ein weiterer Strahlungsbeitrag von 15 % wird als diffuse Kolbenstrahlung im Bereich 4000-10 000 nm emittiert. Hier wird sich vorteilhaft der Umstand zunutze gemacht, daß das Kolbenmaterial (Quarzglas oder Hartglas) selbst ab ca. 4000 nm den Strahlungsbeitrag des Leuchtkörpers absorbiert und damit noch zusätzlich im Sinne eines erfindungsgemäßen Mittels zur diffusen Abstrahlung der IR-Strahlung wirkt. Ein in diesem Bereich wirkendes Filter wird daher nicht benötigt.

Der Reflektor mit Interferenzfilterbeschichtung kann auch mit einer Glühlampe gemäß dem ersten Ausführungsbeispiel betrieben werden.

In Fig. 3 ist zum Vergleich auch noch das spektrale Reflexionsverhalten des eingangs als Stand der Technik erwähnten Kaltlichtspiegels (KLR) eingezeichnet, der nur sichtbare Strahlungsanteile reflektiert.

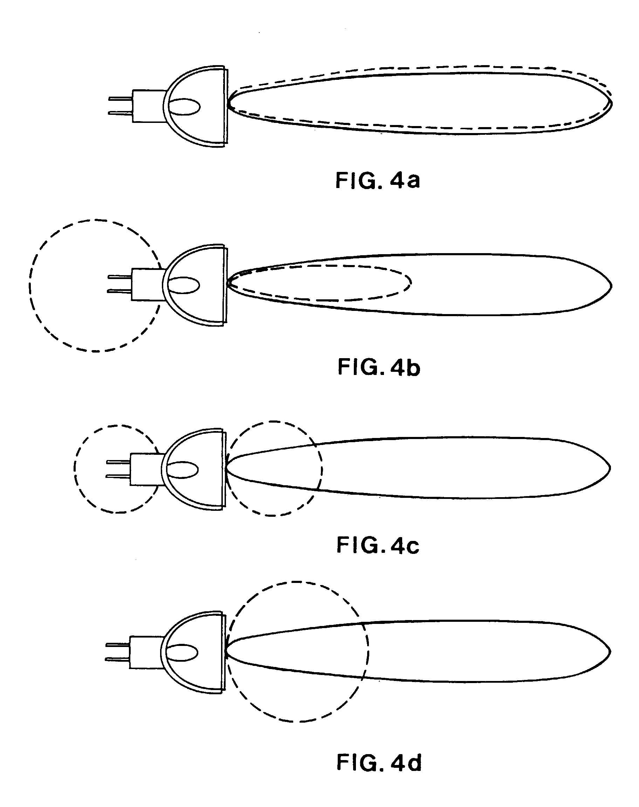

In Fig. 4 ist schematisch die Ausstrahlungscharakteristik verschiedener Reflektoreinheiten gezeigt. Die durchgezogene Linie symbolisiert den sichtbaren, die gestrichelte Linie den IR-Anteil.

Beispiel a) zeigt eine übliche Reflektorlampe mit unbeschichtetem Kolben und einem Aluminium-Spiegel. Hier stimmen die Lichtverteilungen von sichtbarer und IR-Strahlung praktisch überein. Die Wärmebelastung in Vorwärtsrichtung ist daher extrem hoch (vgl. Tab.). Beispiel b) zeigt eine Reflektorlampe mit Kaltlicht-Reflektor (KLR) gemäß dem eingangs beschriebenen Stand der Technik. Die erhebliche Aufheizung der Leuchte durch die rückwärtsgerichtete IR-Strahlung ist deutlich erkennbar (Tab.). Ein Restanteil der IR-Strahlung wird weiterhin gerichtet nach vorne emittiert.
Beispiel c) zeigt eine Reflektorlampe mit erfindungsgemäßer Lampen- (IRC) und Reflektorbeschichtung (IF), jeweils auf Interferenzfilterbasis. Die IR-Strahlung wird zwar zu einem großen Teil ähnlich wie in Beispiel a) nach vorne emittiert, jedoch völlig ungerichtet, so daß sie gleichmäßig verteilt ist. Die punktuelle Wärmebelastung ist daher gesenkt und im Bereich des Lichtkegels nur wenig höher als bei der KLR-Version.
Beispiel d) zeigt schließlich eine zweite erfindungsgemäße Variante, bei der eine beschichtete Halogenglühlampe zusammen mit einem Aluminium-Reflektor verwendet wird. Hier wird praktisch die gesamte IR-Strahlung diffus nach vorn emittiert.

Die nachstehende Tabelle zeigt eine Vergleichsmessung verschiedener Reflektorlampen in einer simulierten Leuchte. Verwendet wurden ein Aluminium-Reflektor mit unbeschichteter Lampe entsprechend Beispiel a), ein Kaltlichtspiegel-Reflektor (KLR) mit beschichteter und unbeschichteter Lampe (s.o. Beispiel b)), ein Aluminium-Reflektor (ALU) mit beschichteter Lampe (s.o. Beispiel d)) sowie ein Interferenzfilter-Reflektor (IF) mit beschichteter Lampe entsprechend Beispiel c). Die Lampe besaß einen zylindrischen Kolben. Bei einer weiteren Messung entsprechend Beispiel c) wurde auch ein elliptischer Kolben verwendet.

Die thermische Belastung durch die Lampen wurde in vorderer Ausstrahlungsrichtung über die Temperaturerhöhung einer schwarzen Holzplatte mit eingelassenem Thermoelement bewertet. Der Abstand zum Reflektor betrug 30 cm.
Die rückwärtige Wärmebelastung wurde durch die Temperaturerhöhung der simulierten Leuchte (Metallkugelgehäuse) ermittelt.

Die Tabelle zeigt eine Gegenüberstellung der gemessenen Temperaturen bei den verschiedenen Lampen und Reflektoren.

**Tabelle**

| Reflektor- und Lampentyp (mit Abschlußscheibe) | rückwärtige Strahlung als Temp.-erhöhung einer sim. Leuchte t in (°C) | Strahlung in vorderer Richtung nach DIN VDE t in (°C) |
|---|---|---|
| ALU mit unbeschichteter Lampe | 112 | 180 |
| KLR mit unbeschichteter Lampe | 173 | 75 |
| KLR mit IRC beschichteter Lampe | 175 | 67 |
| IF mit IRC beschichteter Lampe | 134 | 96 |
| IF mit elliptischer Lampe | 123 | 86 |
| ALU mit IRC beschichteter Lampe | 125 | 128 |

Während bei einer KLR-Lampe der Einfluß einer IR-reflektierenden Beschichtung (IRC = Infra-Rot-Coating) auf dem Lampenkolben nur einen geringen Einfluß auf die Abstrahlung in vorderer Richtung zeigt, ist der Einfluß der gleichen Maßnahme bei Alu-Reflektoren verblüffend. Die Temperaturbelastung sinkt von etwa 180 °C auf ca. 125 °C. Die rückwärtige Strahlung ist drastisch vermindert (statt ca. 170 °C jetzt nur noch ca. 120 °C). Eine noch bessere Wirkung in die Abstrahlungsrichtung wird mit einem Interferenzfilter-Breitbandspiegel als Reflektor erzielt. Die Abstrahlung in vorderer Richtung sinkt auf etwa 95 °C und kommt damit bereits in die Größenordnung der konventionellen KLR-Lampen, ohne daß die Leuchtenbelastung wesentlich ansteigt (ca. 135 °C). Noch bessere Ergebnisse lassen sich bei Energiesparlampen mit geformten Kolben erzielen, da hier der IR-Anteil an der Gesamtstrahlung ohnehin geringer ist. Im angegebenen Beispiel sinkt die IR-Belastung in Vorderrichtung auf ca. 85 °C, während die Leuchtenbelastung auf ca. 125 °C sinkt. Dieser Wert entspricht in etwa der üblichen Leuchtenbelastung ohne wärmereduzierende Maßnahmen in Vorwärtsrichtung (Versuch a).

Statt Aluminium kann für den Reflektor auch eine andere Metallbeschichtung mit ähnlichen Eigenschaften verwendet werden, z.B. Silber.

## Patentansprüche

1. Reflektorlampe, bestehend aus einem Reflektor (5), der eine optische Achse definiert, und einer Halogenglühlampe (2;10) als Strahlungsquelle mit einem Kolben (13), der sichtbares Licht transmittiert, dadurch gekennzeichnet, daß der Kolben (13) mit einem Mittel, insbesondere einer Beschichtung (7,11), versehen ist, dessen Wirkung eine diffuse Abstrahlung der IR-Strahlung aus dem Kolben heraus ist, während der Reflektor sowohl sichtbares Licht als auch einen erheblichen Anteil der IR-Strahlung reflektiert.

2. Reflektorlampe nach Anspruch 1, dadurch gekennzeichnet, daß der Reflektor aus Metall oder aus einem metallbeschichteten Substrat, insbesondere Aluminium als Metall, besteht.

3. Reflektorlampe nach Anspruch 1, dadurch gekennzeichnet, daß der Reflektor ein durchsichtiges Substrat ist, das mit einer Interferenzfilter-Beschichtung (12), die als Breitbandspiegel wirkt, versehen ist.

4. Reflektorlampe nach einem der vorhergehenden Ansprüche, dadurch gekennzeichnet, daß der Lampenkolben mit einer Interferenzfilterbeschichtung (7; 11) als Mittel versehen ist, die IR-Strahlung reflektiert.

5. Reflektorlampe nach Anspruch 4, dadurch gekennzeichnet, daß der Kolben (13) so geformt ist, daß er die Effektivität der Beschichtung erhöht.

6. Reflektorlampe nach Anspruch 5, dadurch gekennzeichnet, daß der Kolben zumindest näherungsweise ellipsoidal oder kugelig geformt ist.

7. Reflektorlampe nach Anspruch 6, dadurch gekennzeichnet, daß die Dicke der einzelnen auf den Kolben aufgebrachten Schichten konstant ist.

8. Reflektorlampe nach Anspruch 3, dadurch gekennzeichnet, daß die Restlichttransmission durch den Reflektor einen Mindestwert von 0,5 % des Gesamtlichtstroms nicht unterschreitet.

9. Reflektorlampe nach Anspruch 1, dadurch gekennzeichnet, daß der Kolben eine axiale Wendel umschließt.

## Claims

1. Reflector lamp comprising a reflector (5) which defines an optical axis, and a halogen incandescent lamp (2; 10) as radiation source having a bulb (13) which transmits visible light, characterized in that the bulb (13) is provided with a means, in particular a coating (7, 11), the effect of which is that IR radiation is diffusely emitted from the bulb, while the reflector reflects both visible light and a substantial component of the IR radiation.

2. Reflector lamp according to Claim 1, characterized in that the reflector consists of metal or of a metal-coated substrate, in particular aluminium as metal.

3. Reflector lamp according to Claim 1, characterized in that the reflector is a transparent substrate which is provided with an interference filter coating (12) which acts as a broadband mirror.

4. Reflector lamp according to one of the preceding claims, characterized in that the lamp bulb is provided with an interference filter coating (7; 11) as a means which reflects the IR radiation.

5. Reflector lamp according to Claim 4, characterized in that the bulb (13) is shaped such that it enhances the efficacy of the coating.

6. Reflector lamp according to Claim 5, characterized in that the shape of the bulb is at least approximately ellipsoidal or spherical.

7. Reflector lamp according to Claim 6, characterized in that the thickness of the individual layers applied to the bulb is constant.

8. Reflector lamp according to Claim 3, characterized in that the residual light transmission through the reflector does not undershoot a minimum value of 0.5% of the total luminous flux.

9. Reflector lamp according to Claim 1, characterized in that the bulb encloses an axial filament.

## Revendications

1. Lampe à réflecteur, constituée d'un réflecteur (5), qui définit un axe optique, et d'une lampe (2; 10) à incandescence à halogène comme source de lumière, comportant une ampoule (13), qui transmet la lumière visible, caractérisée en ce que l'ampoule (13) est munie d'un moyen, notamment d'un revêtement (7; 11), dont l'effet est une émission diffuse du rayonnement infrarouge à partir de l'ampoule, tandis que le réflecteur réfléchit aussi bien de la lumière visible qu'une part considérable du rayonnement infrarouge.

2. Lampe à réflecteur suivant la revendication 1, caractérisée en ce que le réflecteur est en métal ou est constitué d'un substrat revêtu de métal, notamment avec de l'aluminium comme métal.

3. Lampe à réflecteur suivant la revendication 1, caractérisée en ce que le réflecteur est un substrat transparent, qui est muni d'un revêtement (12) de filtre interférentiel qui agit comme miroir à large bande.

4. Lampe à réflecteur suivant l'une des revendications précédentes, caractérisée en ce que l'ampoule de la lampe est munie d'un revêtement (7; 11) de filtre interférentiel en tant que moyen qui réfléchit le rayonnement infrarouge.

5. Lampe à réflecteur suivant la revendication 4, caractérisée en ce que l'ampoule (13) a une forme telle qu'elle augmente l'efficacité du revêtement.

6. Lampe à réflecteur suivant la revendication 5, caractérisée en ce que l'on donne à l'ampoule une forme au moins à peu près ellipsoïdale ou sphérique.

7. Lampe à réflecteur suivant la revendication 6, caractérisée en ce que l'épaisseur des couches individuelles déposées sur l'ampoule est constante.

8. Lampe à réflecteur suivant la revendication 3, caractérisée en ce que la transmission de lumière restante par le réflecteur n'est pas inférieure à une valeur minimum de 0,5 % du flux lumineux total.

9. Lampe à réflecteur suivant la revendication 1, caractérisée en ce que l'ampoule renferme un filament axial.
